# EUROPEAN PATENT APPLICATION

(11) **EP 4 468 791 A1**
(43) Date of publication of application: **27.11.2024**
(21) Application number: 23742826.3
(22) Date of filing: 13.01.2023
(51) Int. Cl.: H04W 52/02

(54) **SIGNAL SENDING METHOD, SIGNAL RECEIVING METHOD, CONFIGURATION SENDING METHOD AND RELATED DEVICE**

(30) Priority: 19.01.2022 CN 202210062492
(71) Applicant: VIVO MOBILE COMMUNICATION CO., LTD., Dongguan, Guangdong 523863 (CN)
(72) Inventor: LI, Jianhui, Dongguan, Guangdong 523863 (CN); LI, Gen, Dongguan, Guangdong 523863 (CN); PAN, Xueming, Dongguan, Guangdong 523863 (CN); YANG, Xiaodong, Dongguan, Guangdong 523863 (CN)
(74) Representative: Conti, Marco
(86) International application number: PCT/CN2023/072165
(87) International publication number: WO 2023/138511

(57) **Abstract**

This application discloses a signal sending method, a signal receiving method, a configuration sending method, and a related device, pertaining to the field of communication technologies. The signal sending method in embodiments of this application includes: A terminal obtains a first configuration of a first signal. The terminal sends the first signal based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

## Description

### CROSS-REFERENCE TO RELATED APPLICATIONS

This application claims priority to Chinese Patent Application No. 202210062492.1 filed in China on January 19, 2022, the entire content of which is incorporated herein by reference.

### TECHNICAL FIELD

This application pertains to the field of communication technologies, and specifically relates to a signal sending method, a signal receiving method, a configuration sending method, and a related device.

### BACKGROUND

In a communication system, a network side device usually needs to turn on uplink and downlink channels to maintain a normal operating state, for example, needs to send a synchronization signal and PBCH block (Synchronization Signal and PBCH block, SSB) and/or a system information block 1 (System Information Block 1, SIB1) over a downlink, and needs to listen to a random access request from a terminal over an uplink. This results in high energy consumption of the network side device.

### SUMMARY

Embodiments of this application provide a signal sending method, a signal receiving method, a configuration sending method, and a related device, to resolve a problem of high energy consumption of a network side device.

According to a first aspect, a signal sending method is provided, including:
A terminal obtains a first configuration of a first signal.

The terminal sends the first signal based on the first configuration in a case that a preset trigger condition is met.

The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

According to a second aspect, a signal receiving method is provided, including:
A network side device receives a first signal from a terminal.

The network side device executes a target operation based on the first signal.

The first signal is sent by the terminal based on a first configuration in case that a preset trigger condition is met, the target operation includes switching from a first operating mode to a second operating mode or maintaining a current operating mode, energy consumption of the network side device in the first operating mode is less than energy consumption in the second operating mode, and the current operating mode is the first operating mode or the second operating mode.

According to a third aspect, a configuration sending method is provided, including:
A network side device sends a second configuration to a terminal. The second configuration is used by the terminal to determine a first configuration of a first signal, the first configuration is used by the terminal to send the first signal in a case that a preset trigger condition is met, the second configuration includes at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal.

According to a fourth aspect, a signal sending apparatus is provided, including:
an obtaining module, configured to obtain a first configuration of a first signal; and
a first sending module, configured to send the first signal based on the first configuration in a case that a preset trigger condition is met.

The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

According to a fifth aspect, a signal receiving apparatus is provided, including:
a first receiving module, configured to receive a first signal from a terminal; and
an execution module, configured to execute a target operation based on the first signal.

The first signal is sent by the terminal based on a first configuration in case that a preset trigger condition is met, the target operation includes the network side device switching from a first operating mode to a second operating mode or maintaining a current operating mode, energy consumption of the network side device in the first operating mode is less than energy consumption in the second operating mode, and the current operating mode is the first operating mode or the second operating mode.

According to a sixth aspect, a configuration sending apparatus is provided, including:
a second sending module, configured to send a second configuration to a terminal. The second configuration is used by the terminal to determine a first configuration of a first signal, the first configuration is used by the terminal to send the first signal in a case that a preset trigger condition is met, the second configuration includes at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal.

According to a seventh aspect, a terminal is provided. The terminal includes a processor and a memory, the memory stores a program or instructions executable on the processor, and when the program or instructions are executed by the processor, steps of the method according to the first aspect are implemented.

According to an eighth aspect, a terminal is provided, including a processor and a communication interface. The processor is configured to obtain a first configuration of a first signal. The communication interface is configured to send the first signal based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

According to a ninth aspect, a network side device is provided. The network side device includes a processor and a memory, the memory stores a program or instructions executable on the processor, and when the program or instructions are executed by the processor, steps of the method according to the second aspect are implemented, or steps of the method according to the third aspect are implemented.

According to a tenth aspect, a network side device is provided, including a processor and a communication interface. The communication interface is configured to receive a first signal from a terminal. The processor is configured to execute a target operation based on the first signal. The first signal is sent by the terminal based on a first configuration in case that a preset trigger condition is met, the target operation includes the network side device switching from a first operating mode to a second operating mode or maintaining a current operating mode, energy consumption of the network side device in the first operating mode is less than energy consumption in the second operating mode, and the current operating mode is the first operating mode or the second operating mode.

Alternatively, the communication interface is configured to send a second configuration to a terminal. The second configuration is used by the terminal to determine a first configuration of a first signal, the first configuration is used by the terminal to send the first signal in a case that a preset trigger condition is met, the second configuration includes at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal.

According to an eleventh aspect, a communication system is provided, including: a terminal and a network side device. The terminal may be configured to execute steps of the signal sending method according to the first aspect. The network side device may be configured to execute steps of the signal receiving method according to the second aspect, or implement steps of the configuration sending method according to the third aspect.

According to a twelfth aspect, a readable storage medium is provided. The readable storage medium stores a program or instructions, and when the program or instructions are executed by a processor, steps of the method according to the first aspect are implemented, or steps of the method according to the second aspect are implemented, or steps of the method according to the third aspect are implemented.

According to a thirteenth aspect, a chip is provided. The chip includes a processor and a communication interface, the communication interface is coupled to the processor, and the processor is configured to run a program or instructions to implement steps of the method according to the first aspect, or implement steps of the method according to the second aspect, or implement steps of the method according to the third aspect.

According to a fourteenth aspect, a computer program product is provided. The computer program product is stored in a storage medium, the computer program product is executed by at least one processor to implement steps of the method according to the first aspect, or implement steps of the method according to the second aspect, or implement steps of the method according to the third aspect.

In the embodiments of this application, a terminal obtains a first configuration of a first signal, and the terminal sends the first signal based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode. In this way, operating mode switching of the network side device is triggered by the terminal by sending the first signal, so that the network side device can apply an energy saving mode, thereby reducing energy consumption of the network side device.

### BRIEF DESCRIPTION OF THE DRAWINGS

FIG. 1 is a structural diagram of a network system to which an embodiment of this application is applicable;
FIG. 2 is a schematic flowchart 1 of a signal sending method according to an embodiment of this application;
FIG. 3 is a schematic flowchart 2 of a signal sending method according to an embodiment of this application;
FIG. 4 is a schematic flowchart 3 of a signal sending method according to an embodiment of this application;
FIG. 5 is a schematic flowchart 4 of a signal sending method according to an embodiment of this application;
FIG. 6 is a schematic flowchart 5 of a signal sending method according to an embodiment of this application;
FIG. 7 is a schematic flowchart 6 of a signal sending method according to an embodiment of this application;
FIG. 8 is a schematic flowchart of a signal receiving method according to an embodiment of this application;
FIG. 9 is a schematic flowchart of a configuration sending method according to an embodiment of this application;
FIG. 10 is a structural diagram of a signal sending apparatus according to an embodiment of this application;
FIG. 11 is a structural diagram of a signal receiving apparatus according to an embodiment of this application;
FIG. 12 is a structural diagram of a configuration sending apparatus according to an embodiment of this application;
FIG. 13 is a structural diagram of a communication device according to an embodiment of this application;
FIG. 14 is a structural diagram of a terminal according to an embodiment of this application; and
FIG. 15 is a structural diagram of a network side device according to an embodiment of this application.

### DETAILED DESCRIPTION

The technical solutions in the embodiments of this application are clearly described below with reference to the accompanying drawings in the embodiments of this application. It is clear that the described embodiments are merely some rather than all of the embodiments of this application. All other embodiments obtained by persons skilled in the art based on the embodiments of this application fall within the protection scope of this application.

In the specification and claims of this application, terms such as "first" and "second" are used to distinguish similar objects, rather than describe a specific sequence or order. It should be understood that, terms used in such a manner are interchangeable in a proper circumstance, so that the embodiments of this application can be implemented in other orders than those illustrated or described herein. Moreover, objects distinguished by "first" and "second" are usually of a same type, and numbers of the objects are not limited. For example, there may be one or more first objects. Furthermore, in the specification and claims, "and/or" represents at least one of associated objects, and the character "/" generally indicates an "or" relationship between the associated objects.

It should be noted that, technologies described in the embodiments of this application are not limited to a long term evolution (Long Term Evolution, LTE)/LTE-advanced (LTE-Advanced, LTE-A) system, and may also be applied to other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-Carrier Frequency Division Multiple Access, SC-FDMA), and other systems. The terms "system" and "network" in the embodiments of this application are often used interchangeably, and the technologies described may be applied to the foregoing systems and radio technologies as well as other systems and radio technologies. A new radio (New Radio, NR) system is described below for a purpose of illustration, and NR terminology is used in most of the following descriptions. However, the technologies are also applicable to applications other than NR system applications, such as a 6^{th} generation (6^{th} Generation, 6G) communication system.

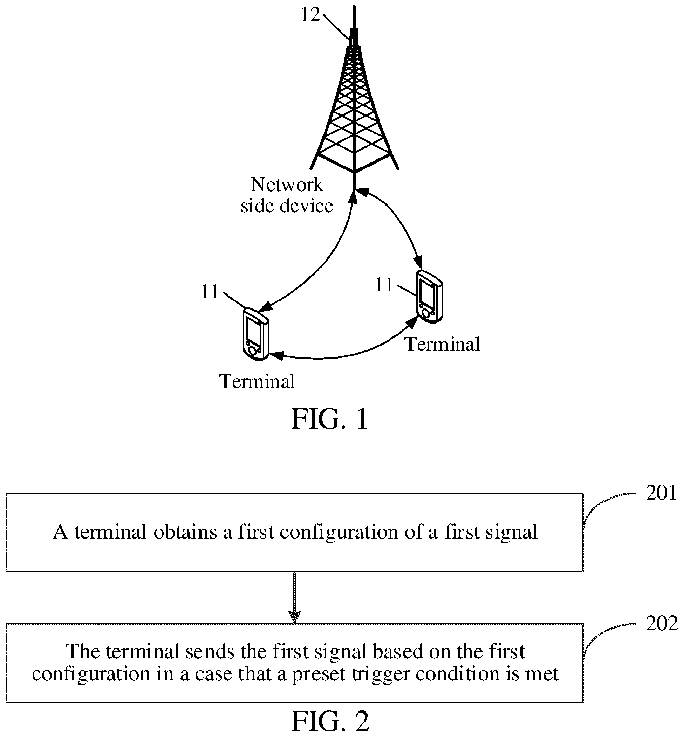

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer), or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), a vehicle user equipment (Vehicle User Equipment, VUE), a pedestrian user equipment (Pedestrian User Equipment, PUE), a smart home device (a home device having a wireless communication function, such as a refrigerator, a television, a washing machine, or furniture), a game console, a personal computer (personal computer, PC), a teller machine, or a self-service machine. The wearable device includes a smart watch, a smart band, a smart headphone, smart glasses, smart jewelry (a smart bracelet, a smart wrist chain, a smart ring, a smart necklace, a smart anklet, or a smart ankle chain), a smart wrist band, smart clothing, or the like. It should be noted that, a specific type of the terminal 11 is not limited in this embodiment of this application. The network side device 12 may include an access network device or a core network device. The access network device 12 may also be referred to as a radio access network device, a radio access network (Radio Access Network, RAN), a radio access network function, or a radio access network element. The access network device 12 may include a base station, a wireless local area network (Wireless Local Area Network, WLAN) access point, a wireless fidelity (Wireless Fidelity, Wi-Fi) node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmitting/receiving point (Transmitting/Receiving Point, TRP), or some other proper terminology in the art. The base station is not limited to a specific technical vocabulary provided that the same technical effects are achieved. It should be noted that, in the embodiments of this application, only a base station in the NR system is used as an example for description, and a specific type of the base station is not limited.

To facilitate understanding, some content related to the embodiments of this application are described below.

### 1. Downlink (Downlink, DL) wake-up signal (Wake-Up Signal, WUS)

In a communication system, to further improve power saving performance of a terminal, a WUS based on a physical downlink control channel (Physical downlink control channel, PDCCH) is introduced. The WUS is used to notify the UE whether there is a need to listen to the PDCCH within a preset discontinuous reception (Discontinuous Reception, DRX) on duration (onDuration). When there is no data, the UE may not need to listen to the PDCCH within the onDuration, which is equivalent to that the UE may be in a sleep state within an entire DRX long cycle (Long cycle), thereby further saving power.

The WUS is a type of downlink control information (Downlink Control Information, DCI), short for DCI with CRC scrambled by a power saving (Power Saving, PS) radio network temporary identifier (Radio Network Temporary Identifier, RNTI) (DCI with CRC scrambled by PS-RNTI, DCP). The PS-RNTI is an RNTI allocated to the terminal by a network side device specifically for a power saving characteristic, and DCI scrambled by the RNTI carries a wake-up or sleep indication to the terminal from the network side device. According to the indication, the terminal determines whether to start an onDuration timer within a next DRX cycle and whether to listen to the PDCCH.

### 2. SSB

A terminal in LTE implements synchronization based on a primary synchronization signal (Primary Synchronization Signal, PSS) and a secondary synchronization signal (Secondary Synchronization Signal, SSS) that are broadcast by a base station. The concept of SSB arises in NR, which includes the original PSS and SSS, a physical broadcast channel (Physical broadcast channel, PBCH), and a demodulation reference signal (Demodulation Reference Signal, DMRS) that are received within four consecutive orthogonal frequency division multiplex (Orthogonal frequency division multiplex, OFDM) symbols, and is mainly used for downlink synchronization.

A periodicity of the SSB may be 5 ms, 10 ms, 20 ms, 40 ms, 80 ms, or 160 ms, and the periodicity is indicated in an SIB 1. During initial cell search, the terminal has not received the SIB 1, and searches for the SSB based on a default periodicity of 20 ms.

A frequency offset in NR between a subcarrier 0 of an RB 0 of the SSB and a subcarrier 0 of a lowest RB in a bandwidth part (Bandwidth Part, BWP) that overlaps with the SSB due to misalignment between a synchronization raster and a frequency raster is referred to as a kSSB.

The SSB in NR may be used for initial access of the terminal, and may also be configured for the terminal as a measurement reference signal. The former is associated with the SIB 1 and is referred to as a cell-defining SSB (cell-defining SSB), and the latter is referred to as a non-cell-defining SSB (non-cell-defining SSB). The SIB1 includes necessary information for the terminal to camp on a cell. In other words, the terminal can camp on the cell only when the cell-defining SSB is obtained through search.

The terminal may obtain a value of the kSSB by demodulating master information block (Master Information Block, MIB) information carried on the PBCH in the SSB. Using a frequency range (Frequency range, FR) 1 as an example, a value range of the kSSB is integers from 0 to 31. When the kSSB is within a range [0, 23], the SSB is a cell-defining SSB. When the kSSB is within a range [24, 30], the SSB is a non-cell-defining SSB. In this case, a network side device may jointly indicate a location of a cell-defining SSB by using the kSSB and a bit in a pdcch-ConfigSIB1 information field. When kSSB=31, the terminal considers that there is no cell-defining SSB near a searched frequency.

Considering that downlink transmission accounts for a large proportion in power consumption of uplink and downlink transmission of a network side device (such as a base station), to reduce energy consumption of the network side device, an optional energy saving solution of the network side device includes increasing a common signal transmission periodicity by turning off downstream transmission, and the like. After the network side device enters such an energy saving mode, another network side device or a terminal needs to help the network side device to timely return from the energy saving mode to a normal operating mode. A possible implementation is that a terminal wakes up a network side device associated with a cell in an energy saving mode. To this end, a signal sending method of this application is proposed, so that a terminal sends a signal based on a corresponding configuration to trigger a network side device to return from a first operating mode to a second operating mode. Energy consumption in the first operating mode is less than energy consumption in the second operating mode.

It should be noted that, the first operating mode in the embodiments of this application may be understood as an energy saving mode, and the second operating mode may be referred to as an awake operating mode. Specifically, the second operating mode may be understood as an energy saving mode or a normal operating mode. For example, the terminal sends a signal based on a corresponding configuration to trigger the network side device to return from an energy saving mode to a normal operating mode. Alternatively, the terminal sends a signal based on a corresponding configuration to trigger the network side device to return from an energy saving mode 1 to an energy saving mode 2. Energy consumption in the energy saving mode 1 is less than energy consumption in the energy saving mode 2.

It should be understood that in the energy saving mode, the network side device may turn off uplink and downlink transmission, or may turn off only downlink transmission, or may turn off downlink transmission of some antennas, to further reduce downlink transmission power. Specifically, no further limitations are given herein.

The signal sending method provided in the embodiments of this application is described in detail below by using some embodiments and application scenarios thereof with reference to the accompanying drawings.

As shown in FIG. 2, a signal sending method provided in an embodiment of this application includes the following steps:
Step 201: A terminal obtains a first configuration of a first signal.
Step 202: The terminal sends the first signal based on the first configuration in a case that a preset trigger condition is met.

The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

In this embodiment of this application, the first configuration may be understood as a sending configuration of the first signal, and the first signal may be referred to as a wake-up signal or another uplink trigger signal, which is not further limited herein. For example, in some embodiments, the first signal may include any one of: an independent wake-up signal sequence, an uplink sounding reference signal, a random access preamble, a message 1, a message 3, and a message A.

Optionally, in some embodiments, the first configuration is a second configuration sent by a first network side device or a second network side device; or the first configuration includes the second configuration and a third configuration agreed upon in a protocol, and the second configuration and the third configuration each include a partial configuration of the first signal.

The first network side device is a network side device associated with a cell that is in an energy saving mode or a network side device associated with a cell that is to enter the energy saving mode, and the second network side device is a network side device associated with a serving cell of the terminal.

In this embodiment of this application, the first configuration, the second configuration, and the third configuration may be all understood as signal configurations of the first signal. In some embodiments, when the third configuration agreed upon in the protocol is present, if signal configurations in the second configuration and the third configuration are different parameter configurations, the second configuration may be understood as a universal set of the first configuration and the third configuration. For example, if the second configuration includes A and B, and the third configuration includes C and D, the first configuration includes and A, B, C, and D. If the signal configurations in the second configuration and the third configuration share some parameter configurations and differ in parameter values of at least some of the shared parameter configurations, parameter values in the second configuration are used. For example, if the second configuration includes A, B, and C1, and the third configuration includes C2 and D, the first configuration includes A, B, C1, and D.

In some embodiments, the second configuration may be understood as the first configuration in the absence of the third configuration agreed upon in the protocol.

In this embodiment of this application, a terminal obtains a first configuration of a first signal, and the terminal sends the first signal based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode. In this way, operating mode switching of the network side device is triggered by the terminal by sending the first signal, so that the network side device can apply an energy saving mode, thereby reducing energy consumption of the network side device.

It should be noted that, in this embodiment of this application, the target network side device may be understood as a receiving end of the first signal. Specifically, when sending the first signal, the terminal may send the first signal to a specified network side device (that is, the target network side device), or may broadcast the first signal to all surrounding network side devices. In this case, a network side device that receives the first signal may be understood as the target network side device.

Optionally, in some embodiments, the first configuration includes at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

In this embodiment of this application, the target network side device may be understood as a network side device that receives the first signal. Optionally, a network side device may send a second configuration to the terminal by using a broadcast message, a system message, a higher layer message, or a physical layer message. For example, the network side device may send the second configuration to the terminal by using radio resource control (Radio Resource Control, RRC), a media access control control element (Media Access Control Control Element, MAC CE), or DCI.

Optionally, in this embodiment of this application, the terminal may send the first signal by using RRC, a MAC CE, uplink control information (Uplink Control Information, UCI), or a broadcast message. It should be noted that, the terminal may determine the receiving end of the first signal based on the first configuration, or the receiving end of the first signal may be indicated by a network side device (that is, the network side device indicates the receiving end of the first signal of the terminal by using additional signaling), or the terminal may determine that a network side device corresponding to a current serving cell is the receiving end of the first signal or a network side device corresponding to a cell before serving cell handover is the receiving end of the first signal. For example, assuming that a network side device corresponding to a cell 1 enters the energy saving mode as required, so that the terminal is handed over from the cell 1 to a cell 2, in this case, the terminal may determine that a network side device corresponding to the cell 1 is the receiving end of the first signal, and the terminal may send the first signal to the network side device corresponding to the cell 1 based on the first configuration in a case that the preset trigger condition is met, so that the network side device corresponding to the cell 1 resumes a normal operating mode or switches from the first operating mode to the second operating mode.

For another example, assuming that the current serving cell of the terminal is a cell corresponding to a network side device associated with a cell that is to enter the energy saving mode, in this case, the terminal may determine that the network side device corresponding to the current serving cell is the receiving end of the first signal. Because the network side device is to enter the energy saving mode, a second configuration is sent to the terminal. When the terminal receives the second configuration, the terminal may send the first signal to the network side device when the preset trigger condition is met (for example, it is determined that the preset trigger condition is met when the second configuration is received). In this case, the network side device may maintain a current operating mode based on the first signal, or may migrate the terminal to another cell until no terminal camps, and then switch from the second operating mode to the first operating mode. In this embodiment of this application, the behavior of entering the energy saving mode may be understood as switching from the second operating mode to the first operating mode.

Optionally, in some embodiments, assuming that the terminal determines no target network side device, the terminal may send the first signal in a form of a broadcast message to a surrounding network side device, to attempt to wake up the surrounding network side device.

Optionally, the first timer may be triggered to start when the preset trigger condition is met.

It should be noted that, specific content of the preset trigger condition may be set based on an actual need. For example, in some embodiments, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

In this embodiment of this application, sending of the first signal is triggered by the network side device, the first indication information may specifically trigger, by indicating that the first signal function switch indicates on, the terminal to send the first signal, or may trigger, by using specific identification information, the terminal to send the first signal. The specific identification information may be understood as an identifier dedicated to indicating the terminal whether to send the first signal.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

In this embodiment of this application, it can be understood that sending of the first signal is triggered by the terminal.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, in some embodiments, the target neighboring cell meets at least one of:
a cell identifier of the target neighboring cell is consistent with the identifier of the cell corresponding to the target network side device in the first configuration; and
a cell group identifier of the target neighboring cell is consistent with the identifier of the cell group corresponding to the target network side device in the first configuration.

It should be understood that the target neighboring cell may be referred to as a proper neighboring cell, or a neighboring cell that meets an access requirement.

Optionally, in some embodiments, after the terminal sends the first signal based on the first configuration in the case that the preset trigger condition is met, the method further includes:
The terminal receives a response message that is sent by the target network side device based on the first signal. The target network side device is a network side device that receives the first signal.

Optionally, the response message includes at least one of:
the target network side device determines to be woken up;
whether the target network side device agrees to be woken up; and
an operating mode after the target network side device receives the first signal.

In this embodiment of this application, the target network side device that receives the first signal may perform mode switching. For example, the target network side device is currently in the first operating mode, and may switch to the second operating mode after receiving the first signal. Alternatively, the target network side device that receives the first signal may maintain a current operating mode. For example, a network side device associated with a cell in the second operating mode is to enter the first operating mode, and in this case, when receiving the first signal, the network side device may maintain the second operating mode without mode switching. The target network side device informs the terminal of a behavior status of the network side device by using the response message, to ensure that the terminal is consistent with the target network side device in understanding.

Optionally, in some embodiments, a condition for stopping sending the first signal includes at least one of:
a fourth configuration associated with the first signal and sent by a network side device is received, and content of the fourth configuration is blank;
the first signal function switch indicates off;
a number of times that the first signal is sent is equal to or greater than the maximum number of times that the first signal is allowed to be sent; and
the second timer for the maximum duration within which the first signal is allowed to be sent expires.

Optionally, a condition for stopping running the second timer includes at least one of:
a synchronization signal and PBCH block of a neighboring cell is obtained by the terminal through search;
a system information block of a neighboring cell is obtained by the terminal through demodulation; and
a number of times that the first signal is sent exceeds the maximum number of times that the first signal is allowed to be sent.

For better understanding of this application, the following detailed descriptions are given by using some specific examples.

In some embodiments, a terminal triggers the terminal to send a WUS to a non-serving cell.

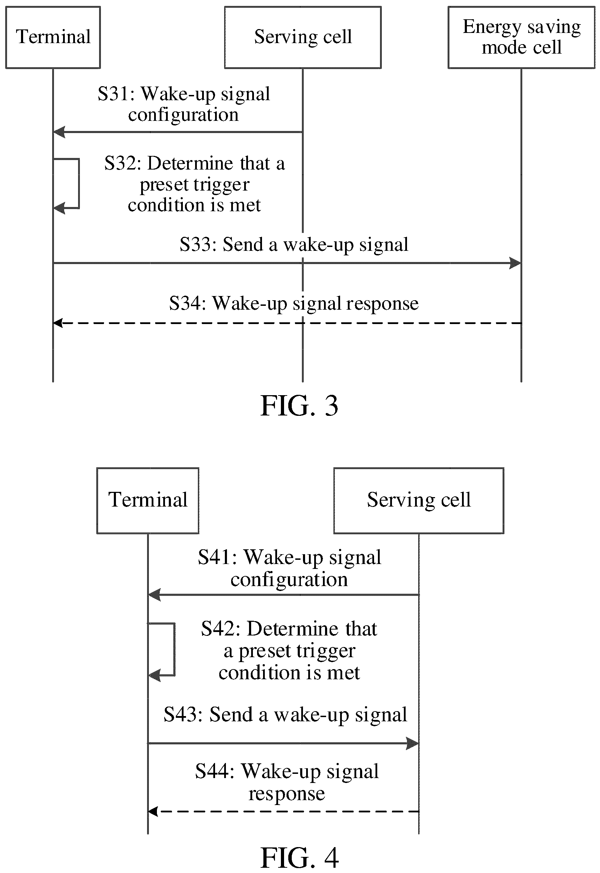

As shown in FIG. 3, the following procedure is performed.

Step S31: A serving cell sends, to the UE, configuration information required for the UE to transmit the WUS. The configuration information includes at least one of:
a WUS function switch: indicating the UE to turn on or off a function of transmitting the WUS to a network side device;
an ID of a cell corresponding to a target network device or an ID of a cell group corresponding to the target network device: indicating an ID of a cell corresponding to a target network device that is expected to wake up when the UE sends the WUS, or an ID of a cell group corresponding to the target network device;
an energy saving mode cell signal strength and/or signal quality threshold: when the UE detects that signal strength of an energy saving mode cell is greater than or equal to or is less than or equal to a specific threshold and/or signal quality is greater than or equal to or is less than or equal to a specific threshold, it is considered that a condition for the UE to trigger the WUS is met;
a serving cell (serving cell) signal strength and/or signal quality threshold: when the UE detects that signal strength of the serving cell is greater than or equal to or is less than or equal to a specific threshold and/or signal quality is greater than or equal to or is less than or equal to a specific threshold, it is considered that a condition for the UE to trigger the WUS is met;
a reference cell (reference cell) signal strength and/or signal quality threshold: when the UE detects that signal strength of a reference cell is greater than or equal to or is less than or equal to a specific threshold and/or signal quality is greater than or equal to or is less than or equal to a specific threshold, it is considered that a condition for the UE to trigger the WUS is met;
a maximum number of times of sending the WUS;
a second timer for a maximum duration within which the WUS is allowed to be sent;
a value of a first timer; and
a WUS sending frequency priority.

Step S32: The UE determines that one or more of the following preset trigger conditions are met:
Condition 1: Signal strength and/or signal quality, measured by the UE, of the serving cell is less than a threshold.

For example, when reference signal received power (Reference Signal Received Power, RSRP) and/or reference signal received quality (Reference Signal Received Quality, RSRQ), measured by the UE, of the serving cell is less than a threshold, the UE considers that the UE is leaving the serving cell, and therefore hopes to wake up a nearby energy saving mode cell for cell reselection or cell handover.

Condition 2: Signal strength and/or signal quality, measured by the UE, of an energy saving mode cell is greater than or less than a threshold.

For example, when an energy saving mode of the energy saving mode cell is sending only a measurement reference signal (such as an SSB) and not sending a SIB, when RSRP and/or RSRQ, measured by the UE, of the energy saving mode cell is greater than a threshold, the UE considers that the UE is approaching the energy saving mode cell, and therefore hopes to wake up the energy saving mode cell to camp on or hand over to the cell.

For example, when the energy saving mode of the energy saving mode cell is reducing transmit power of a downlink signal of the cell, when the RSRP and/or the RSRQ, measured by the UE, of the energy saving mode cell is less than a threshold, the UE considers that the UE is moving away from the energy saving mode cell or currently has poor signal quality, and sends the WUS to the energy saving mode cell, so that the energy saving mode cell is adjusted to proper transmit power of the downlink signal, and the cell can be kept as an available neighboring cell to the UE.

Condition 3: The UE starts the first timer, and the UE still detects no available neighboring cell when the first timer expires.

In this scenario, the UE hopes to wake up some energy saving mode cells for camping or handover.

The available neighboring cell may be a neighboring cell that sends at least an SSB and a SIB1, from which the UE may obtain necessary information for camping on or handing over to the cell, and therefore considers that the neighboring cell is available. Alternatively, the available neighboring cell may be a non-cell-defining cell, and a kSSB carried in an SSB of the non-cell-defining cell indicates, according to an existing protocol, that there is a cell-defining cell nearby.

Condition 4: The UE has a service need.

For example, it is considered that there is a service need when the UE needs to perform one of the following actions:
the UE performs a random access procedure;
the UE sends a scheduling request (scheduling request, SR) to a network side device;
the UE sends a measurement report to a network side device;
the UE needs to perform a radio link failure recovery (Radio Link Failure recovery, RLF recovery) procedure; and
the UE needs to perform a beam failure recovery (Beam Failure Recovery, BFR) procedure.

Condition 5: A WUS function switch field in a WUS configuration is set to an on state.

When a WUS function switch field in a WUS configuration received by the UE is set to an on state, the UE considers that a network side device allows the UE to trigger the UE to send the WUS to an energy saving mode cell.

Step S33: The UE sends the WUS based on the WUS configuration information.

Step S34: The energy saving mode cell sends a WUS response to the UE when receiving the WUS of the UE, which may indicate that the energy saving mode cell acknowledges the reception of the WUS from the UE. Alternatively, the energy saving mode cell may further reply to the UE in the WUS response with some additional information, such as whether the energy saving mode cell agrees to be woken up, or an operating mode after the WUS is received. Herein, step S34 is an optional step. For example, after receiving the WUS of the UE, the energy saving mode cell directly enters an awake mode to operate without making any response.

Optionally, the entering an awake mode may be understood as switching from the first operating mode to the second operating mode.

In some embodiments, a UE triggers the UE to send a WUS to a serving cell.

In an optional application scenario, the serving cell sends a WUS configuration to the UE when entering an energy saving mode (for example, reducing transmit power of a downlink signal of the cell), and the UE sends the WUS to the serving cell after determining that a condition for sending the WUS is met. As shown in FIG. 4, the following procedure may be specifically performed.

Step S41: The serving cell sends, to the UE, configuration information required for the UE to transmit the WUS.

Step S42: The UE determines that one or more of the following preset trigger conditions are met:
Condition 1: Signal strength and/or signal quality, measured by the UE, of the serving cell is less than a threshold.

For example, when RSRP and/or RSRQ, measured by the UE, of the serving cell is less than a threshold, the UE considers that the UE is leaving the serving cell, and therefore sends the WUS to the serving cell, so that the serving cell is adjusted to proper transmit power of the downlink signal.

Condition 2: The UE starts a first timer, and the first timer expires.

For example, the UE starts the first timer, and when the first timer expires, the UE sends the WUS to the serving cell.

Condition 3: A WUS function switch field in a WUS configuration is set to an on state.

When a WUS function switch field in a WUS configuration received by the UE is set to an on state, the UE considers that a network side device allows the UE to trigger the UE to send the WUS to the serving cell.

Step S43: The UE sends the WUS based on the WUS configuration information.

Step S44: The serving cell sends a WUS response to the UE when receiving the WUS of the UE, which may indicate that the serving cell acknowledges the reception of the WUS from the UE. Alternatively, the serving cell may further reply to the UE in the WUS response with some additional information, such as whether the serving cell agrees to be woken up, or an operating mode after the WUS is received. Herein, step S44 is an optional step. For example, after receiving the WUS of the UE, the serving cell directly enters an awake mode to operate without making any response.

In some embodiments, a network triggers a terminal to send a wake-up signal to a non-serving cell.

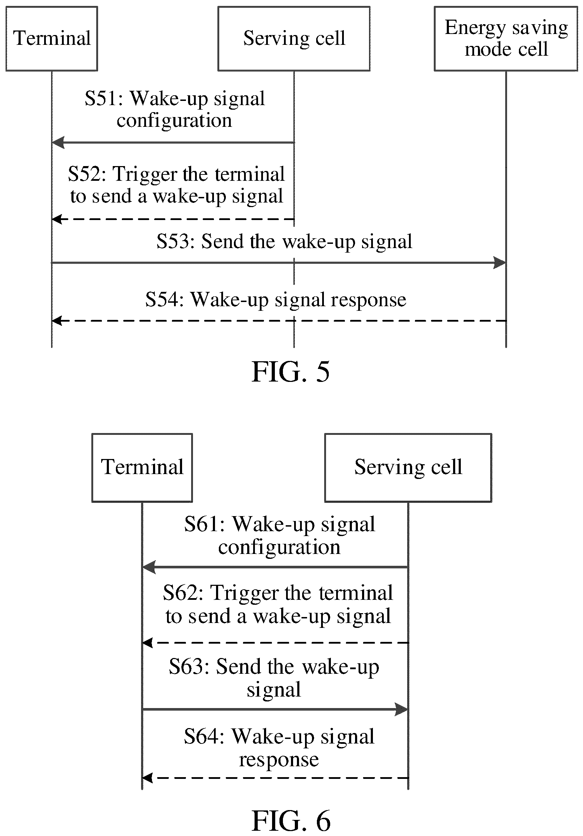

In an optional application scenario, a serving cell cannot determine whether there is a UE near an energy saving mode cell or whether a UE is in a coverage area of the energy saving mode cell, and therefore triggers the UE to send the WUS. If the energy saving mode cell receives the WUS, the energy saving mode cell maintains an awake mode or switches from an energy saving mode to the awake mode. As shown in FIG. 5, the following procedure is performed.

Step S51: The serving cell sends, to the UE, configuration information required for the UE to transmit the WUS. The configuration information includes at least one of:
a WUS function switch: indicating the UE to turn on or off a function of transmitting the WUS to a network side device;
an ID of a cell corresponding to a target network device or an ID of a cell group corresponding to the target network device: indicating an ID of a cell corresponding to a target network device that is expected to wake up when the UE sends the WUS, or an ID of a cell group corresponding to the target network device;
a maximum number of times of sending the WUS;
a second timer for a maximum duration within which the WUS is allowed to be sent;
a value of a first timer; and
a WUS sending frequency priority.

Step S52: The serving cell triggers, by using broadcast signaling or dedicated signaling, the UE to send the WUS.

For example, an idle state (IDLE) and/or inactive state (INACTIVE) UE may be triggered by the serving cell by setting a WUS function switch field in a WUS configuration from an off state to an on state in a SIB message. Alternatively, the serving cell may trigger, by using a paging (paging) message, the UE to send the WUS.

For a connected state (CONNECTED) UE, the serving cell may trigger, by using an RRC signaling message, the UE to send the WUS.

Herein, step S52 is an optional step. For example, the serving cell executes content of steps S51 and S52 in combination. For another example, when the UE receives the WUS configuration of the serving cell in step S51, the UE considers that the serving cell triggers the UE to send the WUS. For example, for the IDLE/INACTIVE state UE, the serving cell may not put WUS configuration information in a SIB message to indicate that the UE is not triggered to send the WUS. Then, if a SIB message of the serving cell includes a WUS configuration, the UE considers that the serving cell triggers the UE to send the WUS.

Step S53 is the same as step S33.

Step S54 is the same as step S34.

In some embodiments, a network triggers a terminal to send a wake-up signal to a serving cell.

In an optional application scenario, the serving cell hopes to enter an energy saving mode, but does not determine whether the energy saving mode affects a UE camping on the serving cell, and therefore triggers the UE to send a WUS. The serving cell may determine, based on the received WUS, whether to enter the energy saving mode or adjust an operating mode. As shown in FIG. 6, a specific process includes as follows:
S61: The serving cell sends, to the UE, configuration information required for the UE to transmit the WUS. The configuration information includes at least one of:
   a WUS function switch: indicating the UE to turn on or off a function of transmitting the WUS to a network side device;
   an ID of a cell corresponding to a target network device or an ID of a cell group corresponding to the target network device: indicating an ID of a cell corresponding to a target network device that is expected to wake up when the UE sends the WUS, or an ID of a cell group corresponding to the target network device;
   a maximum number of times of sending the WUS;
   a second timer for a maximum duration within which the WUS is allowed to be sent; and
   a value of a first timer.
Step S62 is the same as step S52.
Step S63 is the same as step S53.
Step S64 is the same as step S54.

In some embodiments, a terminal wakes up an energy saving mode network device that uses a same frequency or a different frequency.

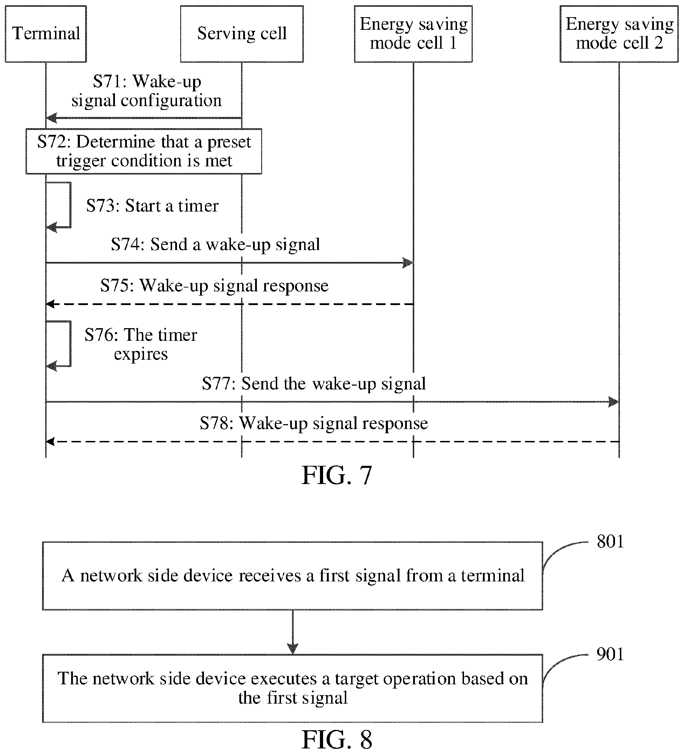

When a serving cell of the terminal uses a frequency 1, the terminal may preferentially send a wake-up signal to an energy saving mode cell using the same frequency (as described in the embodiment corresponding to FIG. 3 or FIG. 4), and when the terminal still finds no available cell at the frequency 1 for a period of time, the terminal may switch to a different frequency 2 to attempt to send the wake-up signal. As shown in FIG. 7, an energy saving mode cell 1 and the serving cell are intra-frequency cells operating at the frequency 1, while an energy saving mode cell 2 operates at the frequency 2, and the energy saving mode cell 2 and the serving cell are inter-frequency cells. The following procedure may be specifically performed.

Step S71: The serving cell sends, to the UE, configuration information required for the UE to transmit the WUS. The configuration information includes at least one of:
a WUS function switch: indicating the UE to turn on or off a function of transmitting the WUS to a network side device;
an ID of a cell corresponding to a target network device or an ID of a cell group corresponding to the target network device: indicating an ID of a cell corresponding to a target network device that is expected to wake up when the UE sends the WUS, or an ID of a cell group corresponding to the target network device;
an energy saving mode cell signal strength and/or signal quality threshold: when the UE detects that signal strength of an energy saving mode cell is greater than or less than a specific threshold and/or signal quality is greater than or less than a specific threshold, it is considered that a condition for the UE to trigger the WUS is met;
a serving cell (serving cell) signal strength and/or signal quality threshold: when the UE detects that signal strength of the serving cell is greater than or less than a specific threshold and/or signal quality is greater than or less than a specific threshold, it is considered that a condition for the UE to trigger the WUS is met;
a reference cell signal strength and/or signal quality threshold: when the UE detects that signal strength of a reference cell is greater than or less than a specific threshold and/or signal quality is greater than or less than a specific threshold, it is considered that a condition for the UE to trigger the WUS is met;
a maximum number of times of sending the WUS;
a second timer for a maximum duration within which the WUS is allowed to be sent; and
a value of a first timer; and
a WUS sending frequency priority.

Step S72: Determine that a condition for sending the WUS is met, which may be specifically determined based on the preset trigger conditions in the examples corresponding to FIG. 3 to FIG. 6.

Step S73: Determine a frequency priority for sending the WUS, for example, the same frequency 1 has a high priority, and start the first timer Ti.

Step S74: The UE sends the WUS at the frequency 1 based on the WUS configuration information.

Step S75: The energy saving mode cell 1 sends a WUS response to the UE when receiving the WUS of the UE. For content of the response, refer to the description of the embodiment shown in FIG. 3, and details are not described herein again. Herein, step S75 is an optional step.

Step S76: When the first timer T₁ expires, the UE stops sending the wake-up signal at the frequency 1, and switches to the frequency 2 to start sending the wake-up signal.

Step S77: The UE sends the WUS at the frequency 2 based on the WUS configuration information.

Step S78: The energy saving mode cell 2 sends a WUS response to the UE when receiving the WUS of the UE. For content of the response, refer to the description of the embodiment shown in FIG. 3, and details are not described herein again. Herein, step S78 is an optional step.

It should be understood that in this embodiment of this application, a priority for the UE to send the WUS at a same frequency/a different frequency is not specifically limited.

For example, if the WUS configuration does not include a WUS frequency priority configuration, the UE may autonomously determine priorities of frequencies or sequence the frequencies according to a rule specified in a protocol. For example, a frequency the same as a frequency of the serving cell has a higher priority than a different frequency. For example, a frequency in a sub 6GHz band has a higher priority than a frequency in an above-6GHz band.

If the WUS configuration includes a WUS frequency priority configuration, the UE may determine a sequence of sending frequencies directly based on this.

In some embodiments, a maximum number of times that the terminal sends the wake-up signal is limited.

A network side device configures a maximum number of times that the terminal sends the wake-up signal, which may be a total maximum number of times that the terminal can send the wake-up signal at all frequencies, or may be a maximum number of times at each frequency, or both may be configured.

For example, the maximum number of times is the total maximum number of times that the terminal can send the wake-up signal at all the frequencies, a value of which is assumed to be 100. It is assumed that the network side device configures that the terminal may send the wake-up signal at two frequencies. If the terminal sends the wake-up signal x times at a frequency A and y times at a frequency B, x+y needs to be not greater than 100.

When the maximum number of times is the maximum number of times that the terminal can send the wake-up signal at each frequency, a value of which is assumed to be 10, if the network side device configures that the terminal may send the wake-up signal at N frequencies, a number of times that the terminal sends the wake-up signal at each of the N frequencies is not greater than 10.

When the two maximum numbers of times are configured, assuming that the total maximum number of times is 100, and the maximum number of times at each frequency is 50, if the network side device configures that the terminal may send the wake-up signal at three frequencies, and the terminal sends the wake-up signal x times at a frequency A, y times at a frequency B, and z times at a frequency C, x needs to be not greater than 50, y needs to be not greater than 50, z needs to be not greater than 50, and x+y+z needs to be not greater than 100.

When the number of times that the terminal sends the WUS exceeds the limit of the maximum number of times, the terminal stops sending the WUS.

In some embodiments, a maximum sending duration timer (timer) for the terminal to send the wake-up signal is configured.

A network side device configures, for the terminal, a second timer for a maximum duration within which the WUS is allowed to be sent, which may be a total maximum duration within which the WUS can be sent at all frequencies, or may be a maximum duration at each frequency, or both may be configured.

For example, the network side device configures, for the terminal, the total maximum duration within which the WUS can be sent at all the frequencies. The timer is started when the terminal sends the WUS for the first time, and then the terminal repeatedly sends the WUS according to the foregoing embodiment, or switches to a different frequency to send the WUS. When the timer expires, the terminal stops sending the WUS.

The terminal stops the timer in one of the following cases:
the terminal obtains a valid SSB of a neighboring cell through search;
the terminal obtains a valid SSB of a neighboring cell through search and obtains a SIB of the cell through demodulation; or
the number of times that the terminal sends the WUS exceeds the limit of the maximum number of times.
In some embodiments, the first timer is started when the UE meets at least one of the following conditions:
   1. The UE receives a WUS configuration sent by a network side device.
      When the UE receives the WUS configuration sent by the network side device, and considers that the network side device triggers the UE to send the WUS, as described in Embodiment 3 or Embodiment 4, the UE starts the first timer. If a condition for sending the WUS is still met until the first timer expires, the UE sends the WUS at a moment when the first timer expires, as in the foregoing embodiment.
   2. The UE receives a message used by a network side device to trigger the UE to send the WUS.
      When the UE receives a message used by a network side device to trigger the UE to send the WUS, the UE starts the first timer. If a condition for sending the WUS is still met until the first timer expires, the UE sends the WUS at a moment when the first timer expires, as in the foregoing embodiment.
   3. The UE sends the WUS to a network device that uses a frequency the same as or different from a frequency of the serving cell.
      The UE sends the WUS to a network device that uses a frequency the same as or different from a frequency of the serving cell, as described in Embodiment 5, and the UE starts the first timer. If no available neighboring cell using a target frequency is woken up until the first timer expires, the UE sends the WUS at a different WUS frequency at a moment when the first timer expires, as in the foregoing embodiment.
   4. Signal strength and/or signal quality, measured by the UE, of the serving cell is less than a threshold, and/or signal strength and/or signal quality, measured by the UE, of an energy saving mode cell is greater than or less than a threshold, and/or signal strength and/or signal quality, measured by the UE, of a reference cell is greater than or less than a threshold.

When the measurement conditions for the three types of cells are met, the UE starts the first timer. If the measurement conditions for the three types of cells are still met until the first timer expires, the UE sends the WUS at a moment when the first timer expires, as in the foregoing embodiment.

With reference to FIG. 8, an embodiment of this application further provides a signal receiving method, including the following steps:
Step 801: A network side device receives a first signal from a terminal.
Step 802: The network side device executes a target operation based on the first signal.

The first signal is sent by the terminal based on a first configuration in case that a preset trigger condition is met, the target operation includes switching from a first operating mode to a second operating mode or maintaining a current operating mode, energy consumption of the network side device in the first operating mode is less than energy consumption in the second operating mode, and the current operating mode is the first operating mode or the second operating mode.

Optionally, before the network side device receives the first signal from the terminal, the method further includes:
The network side device sends a second configuration to the terminal. The second configuration includes at least a partial configuration of the first configuration.

Optionally, the first configuration is the second configuration; or the first configuration includes the second configuration and a third configuration agreed upon in a protocol, and the second configuration and the third configuration each include a partial configuration of the first signal.

Optionally, the first configuration includes at least one of:
a first signal function switch;
an identifier of a cell corresponding to the network side device;
an identifier of a cell group corresponding to the network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

Optionally, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, the target neighboring cell meets at least one of:
a cell identifier of the target neighboring cell is consistent with the identifier of the cell corresponding to the network side device in the first configuration; and
a cell group identifier of the target neighboring cell is consistent with the identifier of the cell group corresponding to the network side device in the first configuration.

Optionally, after the network side device receives the first signal from the terminal in the case that the preset trigger condition is met, the method further includes:
The network side device sends a response message to the terminal based on the first signal.

Optionally, the response message indicates at least one of:
the network side device determines to be woken up;
whether the network side device agrees to be woken up; and
an operating mode after the network side device receives the first signal.

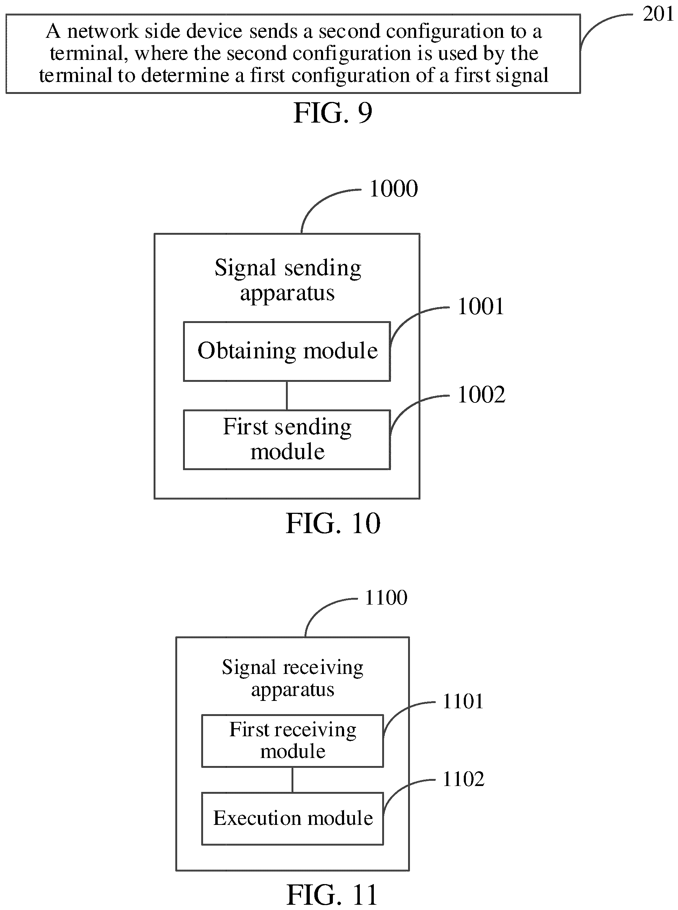

With reference to FIG. 9, an embodiment of this application further provides a configuration sending method, including the following steps:
Step 901: A network side device sends a second configuration to a terminal. The second configuration is used by the terminal to determine a first configuration of a first signal, the first configuration is used by the terminal to send the first signal in a case that a preset trigger condition is met, the second configuration includes at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal.

Optionally, the first configuration is the second configuration sent by the network side device; or the first configuration includes the second configuration and a third configuration agreed upon in a protocol, and the second configuration and the third configuration each include a partial configuration of the first signal.

Optionally, the first configuration includes at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

Optionally, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, the target neighboring cell meets at least one of:
a cell identifier of the target neighboring cell is consistent with the identifier of the cell corresponding to the target network side device in the first configuration; and
a cell group identifier of the target neighboring cell is consistent with the identifier of the cell group corresponding to the target network side device in the first configuration.

The signal sending method provided in the embodiments of this application may be executed by a signal sending apparatus. The signal sending apparatus provided in the embodiments of this application is described by using an example that the signal sending apparatus executes the signal sending method in the embodiments of this application.

With reference to FIG. 10, a signal sending apparatus 1000 provided in an embodiment of this application includes:
an obtaining module 1001, configured to obtain a first configuration of a first signal; and
a first sending module 1002, configured to send the first signal based on the first configuration in a case that a preset trigger condition is met.

The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

Optionally, the first configuration is a second configuration sent by a first network side device or a second network side device; or the first configuration includes the second configuration and a third configuration agreed upon in a protocol, and the second configuration and the third configuration each include a partial configuration of the first signal.

The first network side device is a network side device associated with a cell that is in an energy saving mode or a network side device associated with a cell that is to enter the energy saving mode, and the second network side device is a network side device associated with a serving cell of the terminal.

Optionally, the first configuration includes at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

Optionally, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, the target neighboring cell meets at least one of:
a cell identifier of the target neighboring cell is consistent with the identifier of the cell corresponding to the target network side device in the first configuration; and
a cell group identifier of the target neighboring cell is consistent with the identifier of the cell group corresponding to the target network side device in the first configuration.

Optionally, the signal sending apparatus 1000 further includes:
a second receiving module, configured to receive a response message that is sent by the target network side device based on the first signal. The target network side device is a network side device that receives the first signal.

Optionally, the response message indicates at least one of:
the target network side device determines to be woken up;
whether the target network side device agrees to be woken up; and
an operating mode after the target network side device receives the first signal.

Optionally, a condition for stopping sending the first signal includes at least one of:
a fourth configuration associated with the first signal and sent by a network side device is received, and content of the fourth configuration is blank;
the first signal function switch indicates off;
a number of times that the first signal is sent is equal to or greater than the maximum number of times that the first signal is allowed to be sent; and
the second timer for the maximum duration within which the first signal is allowed to be sent expires.

Optionally, a condition for stopping running the second timer includes at least one of:
a synchronization signal and PBCH block of a neighboring cell is obtained by the terminal through search;
a system information block of a neighboring cell is obtained by the terminal through demodulation; and
a number of times that the first signal is sent exceeds the maximum number of times that the first signal is allowed to be sent.

The signal receiving method provided in the embodiments of this application may be executed by a signal receiving apparatus. The signal receiving apparatus provided in the embodiments of this application is described by using an example that the signal receiving apparatus executes the signal receiving method in the embodiments of this application.

With reference to FIG. 11, a signal receiving apparatus 1100 provided in an embodiment of this application includes:
a first receiving module 1101, configured to receive a first signal from a terminal; and
an execution module 1102, configured to execute a target operation based on the first signal.

The first signal is sent by the terminal based on a first configuration in case that a preset trigger condition is met, the target operation includes the network side device switching from a first operating mode to a second operating mode or maintaining a current operating mode, energy consumption of the network side device in the first operating mode is less than energy consumption in the second operating mode, and the current operating mode is the first operating mode or the second operating mode.

Optionally, the signal receiving apparatus 1100 further includes:
a third sending module, configured to send a second configuration to the terminal. The second configuration includes at least a partial configuration of the first configuration.

Optionally, the first configuration is the second configuration; or the first configuration includes the second configuration and a third configuration agreed upon in a protocol, and the second configuration and the third configuration each include a partial configuration of the first signal.

Optionally, the first configuration includes at least one of:
a first signal function switch;
an identifier of a cell corresponding to the network side device;
an identifier of a cell group corresponding to the network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

Optionally, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, the target neighboring cell meets at least one of:
a cell identifier of the target neighboring cell is consistent with the identifier of the cell corresponding to the network side device in the first configuration; and
a cell group identifier of the target neighboring cell is consistent with the identifier of the cell group corresponding to the network side device in the first configuration.

Optionally, the third sending module is further configured to:
send a response message to the terminal based on the first signal.

Optionally, the response message indicates at least one of:
the network side device determines to be woken up;
whether the network side device agrees to be woken up; and
an operating mode after the network side device receives the first signal.

The configuration sending method provided in the embodiments of this application may be executed by a configuration sending apparatus. The configuration sending apparatus provided in the embodiments of this application is described by using an example that the configuration sending apparatus executes the configuration sending method in the embodiments of this application.

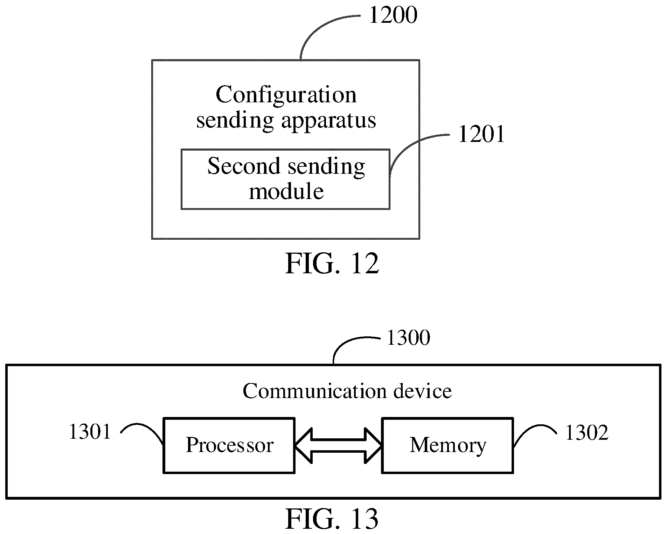

With reference to FIG. 12, a configuration sending apparatus 1200 provided in an embodiment of this application includes:
a second sending module 1201, configured to send a second configuration to a terminal. The second configuration is used by the terminal to determine a first configuration of a first signal, the first configuration is used by the terminal to send the first signal in a case that a preset trigger condition is met, the second configuration includes at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal.

Optionally, the first configuration is the second configuration sent by the network side device; or the first configuration includes the second configuration and a third configuration agreed upon in a protocol, and the second configuration and the third configuration each include a partial configuration of the first signal.

Optionally, the first configuration includes at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

Optionally, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, the target neighboring cell meets at least one of:
a cell identifier of the target neighboring cell is consistent with the identifier of the cell corresponding to the target network side device in the first configuration; and
a cell group identifier of the target neighboring cell is consistent with the identifier of the cell group corresponding to the target network side device in the first configuration.

The signal sending apparatus, the signal receiving apparatus, and the configuration sending apparatus in the embodiments of this application may be an electronic device, for example, an electronic device having an operating system, or may be a component in an electronic device, for example, an integrated circuit or a chip. The electronic device may be a terminal or another device other than a terminal. For example, the terminal may include but is not limited to the foregoing listed types of the terminal 11, and the another device may be a server or a network attached storage (Network Attached Storage, NAS). This is not specifically limited in the embodiments of this application.

The signal sending apparatus, the signal receiving apparatus and the configuration sending apparatus provided in the embodiments of this application can implement respective processes implemented in the method embodiments of FIG. 2 to FIG. 9, and achieve the same technical effects. To avoid repetition, details are not described herein again.

Optionally, as shown in FIG. 13, an embodiment of this application further provides a communication device 1300, including a processor 1301 and a memory 1302. The memory 1302 stores a program or instructions executable on the processor 1301. For example, when the communication device 1300 is a terminal, when the program or instructions are executed by the processor 1301, steps of the signal sending method embodiment are implemented, and the same technical effects can be achieved. When the communication device 1300 is a network side device, when the program or instructions are executed by the processor 1301, steps of the signal receiving method embodiment are implemented, or steps of the configuration sending method embodiment are implemented, and the same technical effects can be achieved. To avoid repetition, details are not described herein again.

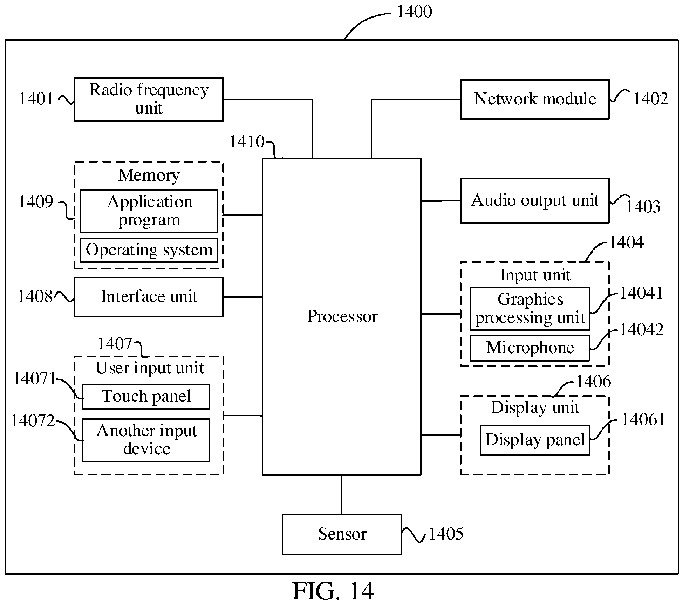

An embodiment of this application further provides a terminal, including a processor and a communication interface. The processor is configured to obtain a first configuration of a first signal. The communication interface is configured to send the first signal based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode. The terminal embodiment corresponds to the foregoing terminal side method embodiment, and each implementation process and implementation manner of the foregoing method embodiment are applicable to the terminal embodiment, and the same technical effect can be achieved. Specifically, FIG. 14 is a diagram of a hardware structure of a terminal according to an embodiment of this application.

The terminal 1400 includes but is not limited to at least some components of a radio frequency unit 1401, a network module 1402, an audio output unit 1403, an input unit 1404, a sensor 1405, a display unit 1406, a user input unit 1407, an interface unit 1408, a memory 1409, a processor 1410, and the like.

Persons skilled in the art can understand that the terminal 1400 may further include a power supply (such as a battery) for supplying power to the components. The power supply may be logically connected to the processor 1410 by using a power management system, to implement functions such as charging, discharging, and power consumption management by using the power management system. The terminal structure shown in FIG. 14 does not constitute a limitation on the terminal, and the terminal may include more or fewer components than shown those shown in the figure, or combine some components, or have a different component arrangement. Details are not described herein.

It should be understood that in this embodiment of this application, the input unit 1404 may include a graphics processing unit (Graphics Processing Unit, GPU) 14041 and a microphone 14042. The graphics processing unit 14041 processes image data of a static picture or a video that is obtained by an image capture apparatus (such as a camera) in a video capture mode or an image capture mode. The display unit 1406 may include a display panel 14061, and the display panel 14061 may be configured in a form of a liquid crystal display, an organic light emitting diode, or the like. The user input unit 1407 includes at least one of a touch panel 14071 and another input device 14072. The touch panel 14071 is also referred to as a touchscreen. The touch panel 14071 may include two parts: a touch detection apparatus and a touch controller. The another input device 14072 may include but is not limited to a physical keyboard, a functional button (such as a volume control button or a switch button), a track ball, a mouse, and a joystick. Detail are not described herein.

In this embodiment of this application, after receiving downlink data from a network side device, the radio frequency unit 1401 may transmit the downlink data to the processor 1410 for processing. In addition, the radio frequency unit 1401 may send uplink data to the network side device. Generally, the radio frequency unit 1401 includes but is not limited to an antenna, an amplifier, a transceiver, a coupler, a low noise amplifier, a duplexer, and the like.

The memory 1409 may be configured to store a software program or instructions and various data. The memory 1409 may mainly include a first storage area for storing the program or instructions and a second storage area for storing the data. The first storage area may store an operating system, an application program or instructions required for at least one function (such as a sound playing function or an image playing function), and the like. In addition, the memory 1409 may include a volatile memory or a non-volatile memory, or the memory 1409 may include both a volatile and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synch Link DRAM, SLDRAM), and a direct rambus dynamic random access memory (Direct Rambus RAM, DR RAM). The memory 1409 in this embodiment of this application includes but is not limited to these and any other memory of a suitable type.

The processor 1410 may include one or more processing units. Optionally, the processor 1410 may integrate an application processor and a modem processor. The application processor mainly processes operations related to an operating system, a user interface, an application program, and the like. The modem processor mainly processes a wireless communication signal, such as a baseband processor. It can be understood that the modem processor may alternatively not be integrated into the processor 1410.

The processor 1410 is configured to obtain a first configuration of a first signal.

The radio frequency unit 1401 is configured to send the first signal based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

In this embodiment of this application, a first configuration of a first signal is obtained, and the first signal is sent based on the first configuration in a case that a preset trigger condition is met. The first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode. In this way, operating mode switching of the network side device is triggered by the terminal by sending the first signal, so that the network side device can apply an energy saving mode, thereby reducing energy consumption of the network side device.

Optionally, the first configuration is a second configuration sent by a first network side device or a second network side device; or the first configuration includes the second configuration and a third configuration agreed upon in a protocol, and the second configuration and the third configuration each include a partial configuration of the first signal.

The first network side device is a network side device associated with a cell that is in an energy saving mode or a network side device associated with a cell that is to enter the energy saving mode, and the second network side device is a network side device associated with a serving cell of the terminal.

Optionally, the first configuration includes at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

Optionally, the preset trigger condition includes at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, where
the second configuration is at least a partial configuration of the first configuration.

Optionally, the preset trigger condition includes at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, where the target neighboring cell is available for access, camping, or handover; and
the terminal initiates a random access procedure or sends a scheduling request to the first network side device.

The first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell. The first preset value is included in the serving cell signal strength threshold, the second preset value is included in the serving cell signal quality threshold, the third preset value or the fifth preset value is included in the energy saving mode cell signal strength threshold, the four preset value or the sixth preset value is included in the energy saving mode cell signal quality threshold, the seventh preset value or the ninth preset value is included in the reference cell signal strength threshold, and the eighth preset value or the tenth preset value is included in the reference cell signal quality threshold.

Optionally, a starting condition of the first timer includes at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value.

The eleventh preset value is included in the serving cell signal strength threshold, the twelfth preset value is included in the serving cell signal quality threshold, the thirteenth preset value or the fifteenth preset value is included in the energy saving mode cell signal strength threshold, the fourteenth preset value or the sixteenth preset value is included in the energy saving mode cell signal quality threshold, the seventeenth preset value or the nineteenth preset value is included in the reference cell signal strength threshold, and the eighteenth preset value or the twentieth preset value is included in the reference cell signal quality threshold.

Optionally, the target neighboring cell meets at least one of:
a cell identifier of the target neighboring cell is consistent with the identifier of the cell corresponding to the target network side device in the first configuration; and
a cell group identifier of the target neighboring cell is consistent with the identifier of the cell group corresponding to the target network side device in the first configuration.

Optionally, the radio frequency unit 1401 is further configured to receive a response message that is sent by the target network side device based on the first signal. The target network side device is a network side device that receives the first signal.

Optionally, the response message includes at least one of:
the target network side device determines to be woken up;
whether the target network side device agrees to be woken up; and
an operating mode after the target network side device receives the first signal.

Optionally, a condition for stopping sending the first signal includes at least one of:
a fourth configuration associated with the first signal and sent by a network side device is received, and content of the fourth configuration is blank;
the first signal function switch indicates off;
a number of times that the first signal is sent is equal to or greater than the maximum number of times that the first signal is allowed to be sent; and
the second timer for the maximum duration within which the first signal is allowed to be sent expires.

Optionally, a condition for stopping running the second timer includes at least one of:
a synchronization signal and PBCH block of a neighboring cell is obtained by the terminal through search;
a system information block of a neighboring cell is obtained by the terminal through demodulation; and
a number of times that the first signal is sent exceeds the maximum number of times that the first signal is allowed to be sent.

An embodiment of this application further provides a network side device, including a processor and a communication interface. The communication interface is configured to receive a first signal from a terminal. The processor is configured to execute a target operation based on the first signal. The first signal is sent by the terminal based on a first configuration in case that a preset trigger condition is met, the target operation includes the network side device switching from a first operating mode to a second operating mode or maintaining a current operating mode, energy consumption of the network side device in the first operating mode is less than energy consumption in the second operating mode, and the current operating mode is the first operating mode or the second operating mode. Alternatively, the communication interface is configured to send a second configuration to a terminal. The second configuration is used by the terminal to determine a first configuration of a first signal, the first configuration is used by the terminal to send the first signal in a case that a preset trigger condition is met, the second configuration includes at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal. The network side device embodiment corresponds to the foregoing network side device method embodiment, and each implementation process and implementation manner of the foregoing method embodiment are applicable to the network side device embodiment, and the same technical effect can be achieved.

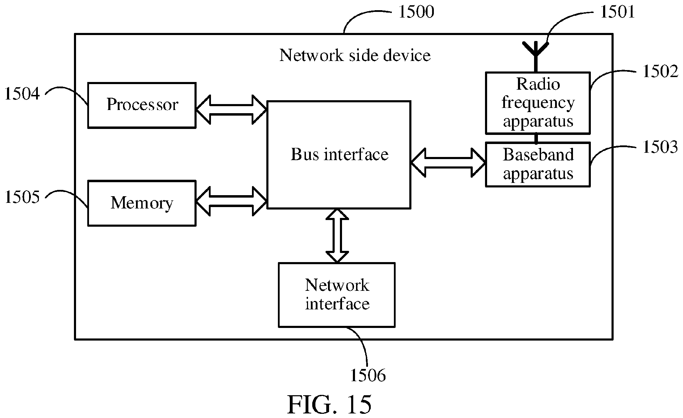

Specifically, an embodiment of this application further provides a network side device. As shown in FIG. 15, the network side device 1500 includes: an antenna 1501, a radio frequency apparatus 1502, a baseband apparatus 1503, a processor 1504, and a memory 1505. The antenna 1501 is connected to the radio frequency apparatus 1502. In an uplink direction, the radio frequency apparatus 1502 receives information by using the antenna 1501, and sends the received information to the baseband apparatus 1503 for processing. In a downlink direction, the baseband apparatus 1503 processes information to be sent, and sends the information to the radio frequency apparatus 1502, and the radio frequency apparatus 1502 processes the received information and then sends the information by using the antenna 1501.

The method performed by the network side device in the foregoing embodiment may be implemented in the baseband apparatus 1503. The baseband apparatus 1503 includes a baseband processor.

The baseband apparatus 1503 may include, for example, at least one baseband board, and a plurality of chips are disposed on the baseband board. As shown in FIG. 15, one of the chips is, for example, a baseband processor, which is connected to the memory 1505 through a bus interface, to invoke a program in the memory 1505 to perform a network side device operation described in the foregoing method embodiment.

The network side device may further include a network interface 1506. The interface is, for example, a common public radio interface (common public radio interface, CPRI).

Specifically, the network side device 1500 in this embodiment of this application further includes an instruction or program stored in the memory 1505 and executable on the processor 1504. The processor 1504 invokes the instruction or program in the memory 1505 to execute the method performed by the modules shown in FIG. 11 or FIG. 12 and achieve the same technical effects. To avoid repetition, details are not described herein again.

An embodiment of this application further provides a readable storage medium. The readable storage medium stores a program or instructions, and when the program or instructions are executed by a processor, processes of the signal sending method embodiment are implemented, or processes of the signal receiving method embodiment are implemented, or processes of the configuration sending method embodiment are implemented, and the same technical effects can be achieved. To avoid repetition, details are not described herein again.

The processor is the processor in the terminal or the network side device in the foregoing embodiment. The readable storage medium includes a computer-readable storage medium, such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement processes of the signal sending method embodiment, or implement processes of the signal receiving method embodiment, or implement processes of the configuration sending method embodiment, and can achieve the same technical effects. To avoid repetition, details are not described herein again.

It should be understood that the chip in this embodiment of this application may also be referred to as a system-on-a-chip, a system chip, a chip system, a system on chip, or the like.

An embodiment of this application further provides a computer program/program product. The computer program/program product is stored in a storage medium, and the computer program/program product is executed by at least one processor to implement processes of the signal sending method embodiment, or implement processes of the signal receiving method embodiment, or implement processes of the configuration sending method embodiment, and can achieve the same technical effects. To avoid repetition, details are not described herein again.

An embodiment of this application further provide a communication system, including: a terminal and a network side device. The terminal may be configured to execute steps of the signal sending method. The network side device may be configured to execute steps of the signal receiving method, or execute steps of the configuration sending method.

It should be noted that, the terms "include", "comprise", and any variants thereof are intended to cover a non-exclusive inclusion. Therefore, in the context of a process, method, object, or apparatus that includes a series of elements, the process, method, object, or apparatus not only includes such elements, but also includes other elements not specified expressly, or may include inherent elements of the process, method, object, or apparatus. Unless otherwise specified, an element limited by "include a/an..." does not exclude other same elements existing in the process, method, object, or apparatus that includes the element. Moreover, it should be noted that the scope of the method and apparatus in the embodiments of this application is not limited to executing the functions in the order shown or discussed, but may include executing the functions in a substantially concurrent manner or in a reverse order depending on the functions involved. For example, the method described may be executed in an order different from that described, and various steps may be further added, omitted, or combined. In addition, features described in some examples may be combined in other examples.

Based on the foregoing descriptions of the embodiments, persons skilled in the art may clearly understand that the methods of the foregoing embodiments may be implemented by software in addition to a necessary universal hardware platform or by hardware. In most circumstances, the former is an exemplary implementation. Based on such understanding, the technical solutions of the embodiments of this application essentially, or the part contributing to a conventional technology may be implemented in a form of a computer software product. The computer software product may be stored in a storage medium (such as a ROM/RAM, a magnetic disk, or an optical disc), and include several instructions for instructing a terminal (which may be a mobile phone, a computer, a server, an air conditioner, a network device, or the like) to perform the methods according to the embodiments of this application.

The embodiments of this application have been described above with reference to the accompanying drawings, but this application is not limited to the specific embodiments, and the specific embodiments are merely exemplary rather than limitative. Persons of ordinary skill in the art may make various variations under the teaching of this application without departing from the essence of this application and the protection scope of the claims, and such variations shall all fall within the protection scope of this application.

## Claims

1. A signal sending method, comprising:
obtaining, by a terminal, a first configuration of a first signal; and
sending, by the terminal, the first signal based on the first configuration in a case that a preset trigger condition is met, wherein
the first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

2. The method according to claim 1, wherein the first configuration is a second configuration sent by a first network side device or a second network side device; or the first configuration comprises the second configuration and a third configuration agreed upon in a protocol, and the second configuration and the third configuration each comprise a partial configuration of the first signal, wherein
the first network side device is a network side device associated with a cell that is in an energy saving mode or a network side device associated with a cell that is to enter the energy saving mode, and the second network side device is a network side device associated with a serving cell of the terminal.

3. The method according to claim 1, wherein the first configuration comprises at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

4. The method according to any one of claims 1 to 3, wherein the preset trigger condition comprises at least one of:
the terminal receives first indication information from a network side device, and the first indication information indicates the terminal to send the first signal;
a first signal function switch in a second configuration received by the terminal from a network side device indicates on; and
the terminal receives a second configuration from a network side device, wherein
the second configuration is at least a partial configuration of the first configuration.

5. The method according to any one of claims 1 to 3, wherein the preset trigger condition comprises at least one of:
signal strength, measured by the terminal, of the second network side device is less than or equal to a first preset value;
signal quality, measured by the terminal, of the second network side device is less than or equal to a second preset value;
signal strength, measured by the terminal, of the first network side device is greater than or equal to a third preset value;
signal quality, measured by the terminal, of the first network side device is greater than or equal to a fourth preset value;
the signal strength, measured by the terminal, of the first network side device is less than or equal to a fifth preset value;
the signal quality, measured by the terminal, of the first network side device is less than or equal to a sixth preset value;
signal strength, measured by the terminal, of a third network side device is greater than or equal to a seventh preset value;
signal quality, measured by the terminal, of the third network side device is greater than or equal to an eighth preset value;
the signal strength, measured by the terminal, of the third network side device is less than or equal to a ninth preset value;
the signal quality, measured by the terminal, of the third network side device is less than or equal to a tenth preset value;
the first timer for triggering the terminal to send the first signal expires, and the terminal detects no target neighboring cell, wherein the target neighboring cell is available for access, camping, or handover; and
the terminal initiates a random access procedure or sends a scheduling request to the first network side device, wherein
the first network side device is the network side device associated with the cell that is in the energy saving mode or the network side device associated with the cell that is to enter the energy saving mode, the second network side device is the network side device associated with the serving cell of the terminal, and the third network side device is a network side device associated with a reference cell of an awake energy saving mode cell; and the first preset value is comprised in the serving cell signal strength threshold, the second preset value is comprised in the serving cell signal quality threshold, the third preset value or the fifth preset value is comprised in the energy saving mode cell signal strength threshold, the four preset value or the sixth preset value is comprised in the energy saving mode cell signal quality threshold, the seventh preset value or the ninth preset value is comprised in the reference cell signal strength threshold, and the eighth preset value or the tenth preset value is comprised in the reference cell signal quality threshold.

6. The method according to claim 5, wherein a starting condition of the first timer comprises at least one of:
the terminal receives a second configuration from the first network side device, the second network side device, or the third network side device, and the second configuration is at least a partial configuration of the first configuration;
the terminal receives, from the first network side device, the second network side device, or the third network side device, a message for triggering the terminal to send the first signal;
the terminal sends the first signal to the target network side device that uses a frequency the same as or different from a frequency of the serving cell;
the signal strength, measured by the terminal, of the second network side device is less than or equal to an eleventh preset value;
the signal quality, measured by the terminal, of the second network side device is less than or equal to a twelfth preset value;
the signal strength, measured by the terminal, of the first network side device is greater than or equal to a thirteenth preset value;
the signal quality, measured by the terminal, of the first network side device is greater than or equal to a fourteenth preset value;
the signal strength, measured by the terminal, of the first network side device is less than or equal to a fifteenth preset value;
the signal quality, measured by the terminal, of the first network side device is less than or equal to a sixteenth preset value;
the signal strength, measured by the terminal, of the third network side device is greater than or equal to a seventeenth preset value;
the signal quality, measured by the terminal, of the third network side device is greater than or equal to an eighteenth preset value;
the signal strength, measured by the terminal, of the third network side device is less than or equal to a nineteenth preset value; and
the signal quality, measured by the terminal, of the third network side device is less than or equal to a twentieth preset value, wherein
the eleventh preset value is comprised in the serving cell signal strength threshold, the twelfth preset value is comprised in the serving cell signal quality threshold, the thirteenth preset value or the fifteenth preset value is comprised in the energy saving mode cell signal strength threshold, the fourteenth preset value or the sixteenth preset value is comprised in the energy saving mode cell signal quality threshold, the seventeenth preset value or the nineteenth preset value is comprised in the reference cell signal strength threshold, and the eighteenth preset value or the twentieth preset value is comprised in the reference cell signal quality threshold.

7. The method according to claim 5, wherein the target neighboring cell meets at least one of:
a cell identifier of the target neighboring cell is consistent with the identifier of the cell corresponding to the target network side device in the first configuration; and
a cell group identifier of the target neighboring cell is consistent with the identifier of the cell group corresponding to the target network side device in the first configuration.

8. The method according to claim 1, wherein after the sending, by the terminal, the first signal based on the first configuration in a case that a preset trigger condition is met, the method further comprises:
receiving, by the terminal, a response message that is sent by the target network side device based on the first signal, wherein the target network side device is a network side device that receives the first signal.

9. The method according to claim 8, wherein the response message indicates at least one of:
the target network side device determines to be woken up;
whether the target network side device agrees to be woken up; and
an operating mode after the target network side device receives the first signal.

10. The method according to any one of claims 1 to 3, wherein a condition for stopping sending the first signal comprises at least one of:
a fourth configuration associated with the first signal and sent by a network side device is received, and content of the fourth configuration is blank;
the first signal function switch indicates off;
a number of times that the first signal is sent is equal to or greater than the maximum number of times that the first signal is allowed to be sent; and
the second timer for the maximum duration within which the first signal is allowed to be sent expires.

11. The method according to claim 10, wherein a condition for stopping running the second timer comprises at least one of:
a synchronization signal and PBCH block of a neighboring cell is obtained by the terminal through search;
a system information block of a neighboring cell is obtained by the terminal through demodulation; and
a number of times that the first signal is sent exceeds the maximum number of times that the first signal is allowed to be sent.

12. A signal receiving method comprising:
receiving, by a network side device, a first signal from a terminal; and
executing, by the network side device, a target operation based on the first signal, wherein
the first signal is sent by the terminal based on a first configuration in case that a preset trigger condition is met, the target operation comprises switching from a first operating mode to a second operating mode or maintaining a current operating mode, energy consumption of the network side device in the first operating mode is less than energy consumption in the second operating mode, and the current operating mode is the first operating mode or the second operating mode.

13. The method according to claim 12, wherein before the receiving, by a network side device, a first signal from a terminal, the method further comprises:
sending, by the network side device, a second configuration to the terminal, wherein the second configuration comprises at least a partial configuration of the first configuration.

14. The method according to claim 13, wherein the first configuration is the second configuration; or the first configuration comprises the second configuration and a third configuration agreed upon in a protocol, and the second configuration and the third configuration each comprise a partial configuration of the first signal.

15. The method according to claim 12, wherein the first configuration comprises at least one of:
a first signal function switch;
an identifier of a cell corresponding to the network side device;
an identifier of a cell group corresponding to the network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

16. The method according to claim 12, wherein after the receiving, by a network side device, a first signal from a terminal in a case that a preset trigger condition is met, the method further comprises:
sending, by the network side device, a response message to the terminal based on the first signal.

17. The method according to claim 16, wherein the response message indicates at least one of:
the network side device determines to be woken up;
whether the network side device agrees to be woken up; and
an operating mode after the network side device receives the first signal.

18. A configuration sending method, comprising:
sending, by a network side device, a second configuration to a terminal, wherein the second configuration is used by the terminal to determine a first configuration of a first signal, the first configuration is used by the terminal to send the first signal in a case that a preset trigger condition is met, the second configuration comprises at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, the current operating mode is the first operating mode or the second operating mode, and the target network side device is a network side device for receiving the first signal.

19. The method according to claim 18, wherein the first configuration is the second configuration sent by the network side device; or the first configuration comprises the second configuration and a third configuration agreed upon in a protocol, and the second configuration and the third configuration each comprise a partial configuration of the first signal.

20. The method according to claim 18, wherein the first configuration comprises at least one of:
a first signal function switch;
an identifier of a cell corresponding to the target network side device;
an identifier of a cell group corresponding to the target network side device;
an energy saving mode cell signal strength threshold;
an energy saving mode cell signal quality threshold;
a serving cell signal strength threshold;
a serving cell signal quality threshold;
a reference cell signal strength threshold;
a reference cell signal quality threshold;
a maximum number of times that the first signal is allowed to be sent;
a second timer for a maximum duration within which the first signal is allowed to be sent;
a value of a first timer for triggering the terminal to send the first signal; and
a first signal sending frequency priority.

21. A signal sending apparatus, comprising:
an obtaining module, configured to obtain a first configuration of a first signal; and
a first sending module, configured to send the first signal based on the first configuration in a case that a preset trigger condition is met, wherein
the first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

22. A signal receiving apparatus, comprising:
a first receiving module, configured to receive a first signal from a terminal; and
an execution module, configured to execute a target operation based on the first signal, wherein
the first signal is sent by the terminal based on a first configuration in case that a preset trigger condition is met, the target operation comprises the network side device switching from a first operating mode to a second operating mode or maintaining a current operating mode, energy consumption of the network side device in the first operating mode is less than energy consumption in the second operating mode, and the current operating mode is the first operating mode or the second operating mode.

23. A configuration sending apparatus, comprising:
a second sending module, configured to send a second configuration to a terminal, wherein the second configuration is used by the terminal to determine a first configuration of a first signal, the first configuration is used by the terminal to send the first signal in a case that a preset trigger condition is met, the second configuration comprises at least a partial configuration of the first configuration, the first signal is used to trigger a target network side device to switch from a first operating mode to a second operating mode or maintain a current operating mode, energy consumption of the target network side device in the first operating mode is less than energy consumption in the second operating mode, and the current operating mode is the first operating mode or the second operating mode.

24. A terminal, comprising a processor and a memory, wherein the memory stores a program or instructions executable on the processor, and when the program or instructions are executed by the processor, steps of the signal sending method according to any one of claims 1 to 11 are implemented.

25. A network side device, comprising a processor and a memory, wherein the memory stores a program or instructions executable on the processor, and when the program or instructions are executed by the processor, steps of the signal receiving method according to any one of claims 12 to 17 are implemented, or steps of the configuration sending method according to any one of claims 18 to 20 are implemented.

26. A readable storage medium, storing a program or instructions, wherein when the program or instructions are executed by a processor, steps of the signal sending method according to any one of claims 1 to 11 are implemented, or steps of the signal receiving method according to any one of claims 12 to 17 are implemented, or steps of the configuration sending method according to any one of claims 18 to 20 are implemented.
